# EUROPÄISCHE PATENTSCHRIFT

(11) **EP 0 425 612 B1**
(45) Veröffentlichungstag und Bekanntmachung des Hinweises auf die Patenterteilung: **11.01.1995**
(21) Anmeldenummer: 90906185.5
(22) Anmeldetag: 19.04.1990
(51) Int. Cl.: F15C 5/00

(54) **MIKROMECHANISCHER AKTUATOR**
MICROMECHANICAL ACTUATOR
ACTUATEUR MICROMECANIQUE

(30) Priorität: 28.04.1989 DE 3914031
(43) Veröffentlichungstag der Anmeldung: 08.05.1991
(73) Patentinhaber: Daimler-Benz Aerospace Aktiengesellschaft, 81663 München (DE)
(72) Erfinder: BOSCH, Dieter, D-8000 München 80 (DE); SEIDEL, Helmut, D-8130 Starnberg (DE); MÜCK, Günther, D-8150 Holzkirchen (DE)
(86) Internationale Anmeldenummer: EP9000634
(87) Internationale Veröffentlichungsnummer: WO9013750

(56) Entgegenhaltungen:
- EP-A- 0 339 528
- DE-A- 3 621 332
- DE-U- 8 614 741
- US-A- 4 826 131

## Beschreibung

Die Erfindung bezieht sich auf einen mikromechanischen Aktuator der im Obergriff des Patentanspruchs 1 angegebenen Art. Ein derartiger Aktuator ist bekannt aus der EP-A-0 339 528.

Bisher bekannt sind eine Reihe von mikromechanischen Aktuatoren, wie z.B. die Ausstoßelemente von Tintenstrahldruckern, Lichtventile, Lichtmodulatoren und dergleichen. Bekannt ist dabei die Erzeugung von Antriebskräften für die o.g. Bauelemente mit Hilfe elektrostatischer Kräfte. Diese Methode ist relativ leicht realisierbar und bietet ferner die Möglichkeit mit sehr geringen Leistungen auszukommen. Andererseits ergibt dies jedoch den Nachteil, daß wegen der geringen Antriebsleistungen auch die erzeugten Kräfte, insbesondere Steuer- oder Stellkräfte nicht sehr groß sind. Dies macht sich besonders dann nachteilig bemerkbar, wenn z.B. ein Fluid in Bewegung gesetzt oder gestoppt werden soll. Die Schaltfrequenz von mechanischen oder fluidischen angetriebenen Stellern ist gering.

Aus der älteren Patentanmeldung entsprechend der DE 38 14 150 A1 ist eine Anordnung aus mikrostrukturierten Komponenten, insbesondere ein Ventil bekannt, aus dem die Merkmale des Oberbegriffs des vorliegenden Patentanspruchs 1 hervorgehen.

Die Konstruktion des bekannten Ventilantriebs hat allerdings den Nachteil, daß die Kräfteaufbringung peripher erfolgt.

Aufgabe vorliegender Erfindung ist es, einen mikromechanischen Aktuator der eingangs genannten Art zu schaffen, der einerseits mit hoher Schaltfrequenz betrieben werden kann und andererseits reproduzierbare fein dosierte Stellkräfte erzeugt bzw. abgibt.

Gelöst wird diese Aufgabe durch die im Hauptanspruch angegebenen Merkmale. Aus- und Weiterbildungen der Erfindung sind im Patentansprüch 2 sowie in der Beschreibung und Zeichnung von Ausführungsbeispielen enthalten. Zur Erfindung gehören ausdrücklich auch Kombinationen der beschriebenen Ausführungen untereinander.

Die wesentlichsten Vorteile der Erfindung sowie Anwendungen hierfür ergeben sich aus nachstehenden Ausführungsbeispielen.

Die vorgesehene magnetische Ansteuerung des erfindungsgemäßen mikromechanischen Aktuators bietet gegenüber bekannten Verfahren vielfältige Vorteile. Durch die planare Anordnung der Permanent-Magnete lassen sich relativ große Kräfte zentral aufbringen, ohne daß eine Kräfteaufteilung in Komponenten mit anderer Richtung stattfindet. Ferner lassen sich die Kräfte in beiden Richtungen anwenden und sowohl im Ein-/Ausschaltmodus betreiben als auch zum Umschalten von einer Stellung in eine andere. Der erfindungsgemäße mikromechanische Aktuator läßt sich mit vertretbar geringen elektrischen Spannungen betreiben.

Der erfindungsgemäße mikromechanische Aktuator läßt sich mit den bekannten Methoden der Mikromechanik, wie Ätztechnik oder andere Art der Feinstrukturierung wie auch mit Hilfe der Herstellungstechniken für integrierte Schaltkreise (IC's) relativ einfach herstellen. Ein wichtiger Vorteil ist die integrierte Bauweise des erfindungsgemäßen mikromechanischen Aktuators in einer Ebene, die die Ansteuerung einschließt und auf kleinem Raum eine derartige Kombination realisieren läßt.

Anwendungen der Erfindung liegen vor allem bei Mikroventilen für pneumatische und hydraulische Anwendungen, weil hier der vorgeschlagene Aktuator wegen seiner geringen Abmessungen und kleinen Massen einen großen Vorteil bildet. Insbesondere ist es leicht hiermit einen Gasfluß zu steuern aber auch sonstige Stell- und Schaltfunktion auszuüben. Vorteilhaft ist eine Anwendung, z.B. als pneumatischer Digital/Analog-Wandler, weil ein binärer Schaltzustand Ein/Aus- bzw Offen/Zu leicht erreicht werden kann. Bei Anordnung mehrerer Aktuatoren in Linien und Spalten (Array) über eine Fläche läßt sich auch eine geometrische Zuordnung, d.h. eine flächenhafte Detektor- oder Sensoranwendung oder eine Ultraschallanwendung oder Sonaranwendung o.a. Schwingeranwendung leicht realisieren. Lichtmodulatoren, Lichtventile, Beugungsgitter, mechanische Gitter, Siebe, wie Mikrosiebe, optoelektronische, fluidische, mechanoelektrische Zeilen- und Array-Anordnungen und Anwendungen ermöglicht die Erfindung durch ihre einfache und wirkungsvolle Bauweise immer dann, wenn Stell- und Steuerfunktionen auf kleinstem Raum auch mit hoher Frequenz ausgeführt werden sollen einschließlich solcher Stell- und Steuertriebe wie sie in Miniaturpumpen (Membranpumpen) und Miniaturstellmotoren (Linear Pusher) angewandt werden. Der erfindungsgemäße mikromechanische Aktuator kann sowohl zur stufenweisen als auch zur stufenlosen Stellkraftübertragung dienen und nicht nur im binären Betrieb sondern auch mehrstufig kontinuierlich oder diskontinuierlich und zum Steuern eines Gesamtflusses oder eines Teilflusses einer Strömung bzw. von elektrischen Strömen oder Schall- oder Lichtwellen dienen. Er ist geeignet mit Gegendruck oder ohne Gegendruck sowie mit Vakuum zu arbeiten.

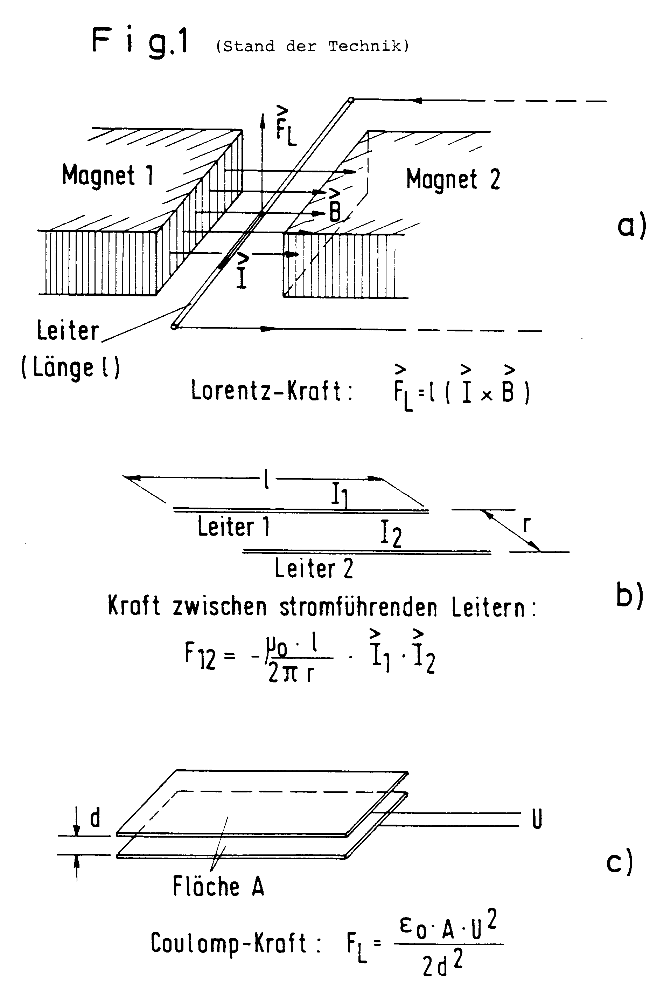

Beschreibung von Ausführungsbeispielen:
Die vorliegende Erfindung benützt für die Realisierung mikromechanischer Aktuatoren folgende Antriebskräfte (siehe Fig. 1):
- Fig. 1a: Kraft auf einen stromführenden Leiter im Magnetfeld ("Kraft 1")
- Fig. 1b: Kraft zwischen 2 stromführenden Leitern ("Kraft 2")
- Fig. 1c: Kraft zwischen elektrisch geladenen, leitenden Flächen ("Kraft 3")
In Fig. 2 sind 4 prinzipielle Bauformen von Aktuatoren aus strukturiertem Silizium dargestellt. Als bewegliche Elemente enthalten sie Biegebalken und Membranen, die mit Hilfe der Kräfte 1 und 3 angetrieben bzw. festgehalten werden. Die auf den beweglichen Elementen angedeuten "Stromleiter" sind im Querschnitt zu sehen, verlaufen also senkrecht zur Zeichenebene. Das zur Erzeugung von Kraft 1 erforderliche Magnetfeld wird in allen Fällen von Dauermagneten erzeugt. Prinzipiell sind hierfür auch Spulenanordnungen denkbar, sie werden jedoch hier außer Acht gelassen aus folgenden Gründen:
- zur Felderzeugung wird elektrische Leistung benötigt
- aus geometrischen und energetischen Gründen können nur verhältnismäßig kleine Felder erzeugt werden
- die Herstellung von Spulen ist kostenintensiv
Die Integration der verwendeten Dauermagnete kann auf zwei verschiedene Arten erfolgen:
- fertige Dauermagnete der gewünschten Form und bevorzugter Magnetisierungsrichtung werden direkt mit dem Silizium-Teil des Aktuators mit Hilfe von an sich bekannten Klebern verbunden. Die dabei nötigen Justierhilfen in Form von mechanischen Positionsbegrenzern sind in die Silizium-Struktur eingearbeitet,
- die Herstellung der Dauermagnete wird in den Aktuator-Technologie-Ablauf mit einbezogen: Das pulverisierte Magnetmaterial wird in entsprechenden "Wannen" des Siliziumkörpers in die erforderliche Form gepreßt, gesintert, thermisch nachbehandelt und magnetisiert.

Als Dauermagnet-Materialien werden vorzugsweise Kobalt-Samarium und Neodym-Eisen-Bor verwendet. Diese Werkstoffe sind durch ein sehr hohes Energieprodukt-Maximum gekennzeichnet, weshalb sich Magnete hoher Feldstärke auch in sehr kleinen Dimensionen realisieren lassen, die mit der Silizium-Struktur integrierbar sind.

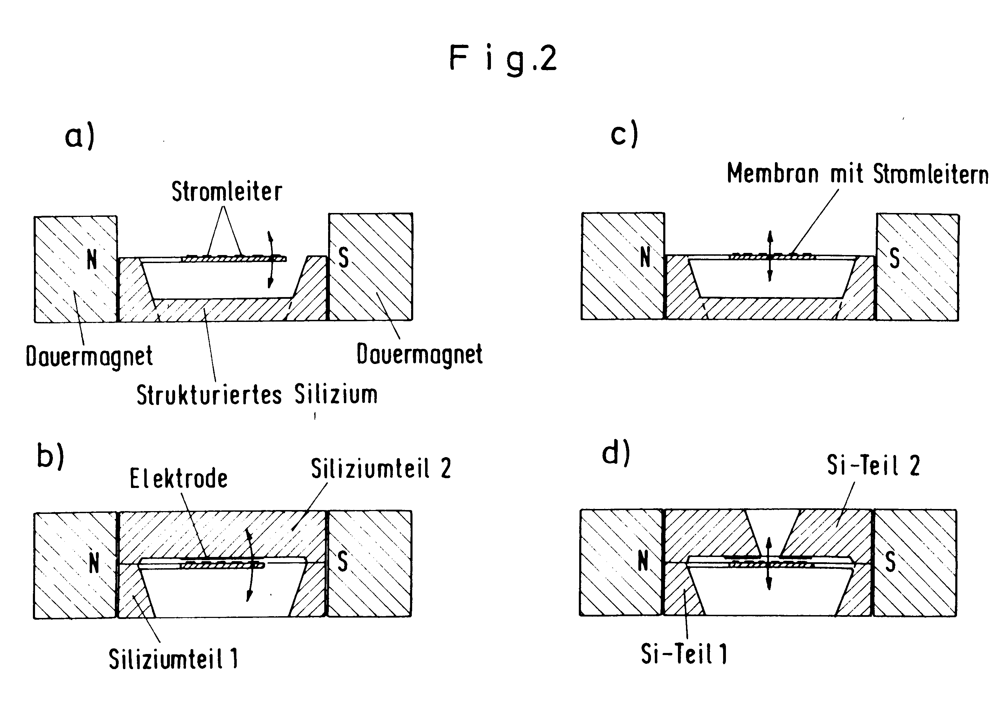

Im Einzelnen zeigt Fig. 2 folgende Arten von Aktuatoren:
- Fig. 2a: Stationär auslenkbarer oder kontinuierlich schwingender Biegebalken. Antrieb: Kraft 1
Mögliche Anwendung: Laser-Scanner. Hierbei muß ein Teil der Balkenoberfläche verspiegelt werden.
- Fig. 2b: Anordnung analog Fig. 2a, jedoch mit zusätzlicher Elektrode gegenüber der Balkenoberfläche. Antrieb: Kräfte 1 und 3 Als Gegenelektrode zur Erzeugung von Kraft 3 dient die mit Stromleitern belegte Balkenoberfläche, die in diesem Fall mit einer Isolatorschicht versehen ist. Die o.g. Elektrode kann z.B. dazu dienen, den Biegebalen in der ausgelenkten Position festzuhalten, sodaß 2 Ruhezustände möglich sind.
- Fig. 2c: Anordnung analog Fig. 2a, jedoch mit Membran als beweglichem Element. Antrieb: Kraft 1
- Fig. 2d: Anordnung analog Fig. 2c, jedoch mit zusätzlicher Elektrode gegenüber der Membranoberfläche. Antrieb Kräfte 1 und 3 Fügt man (wie gezeigt) in den die Elektrode tragenden Si-Teil 2 eine Bohrung ein, so ist diese Anordnung speziell als Ventil geeignet.

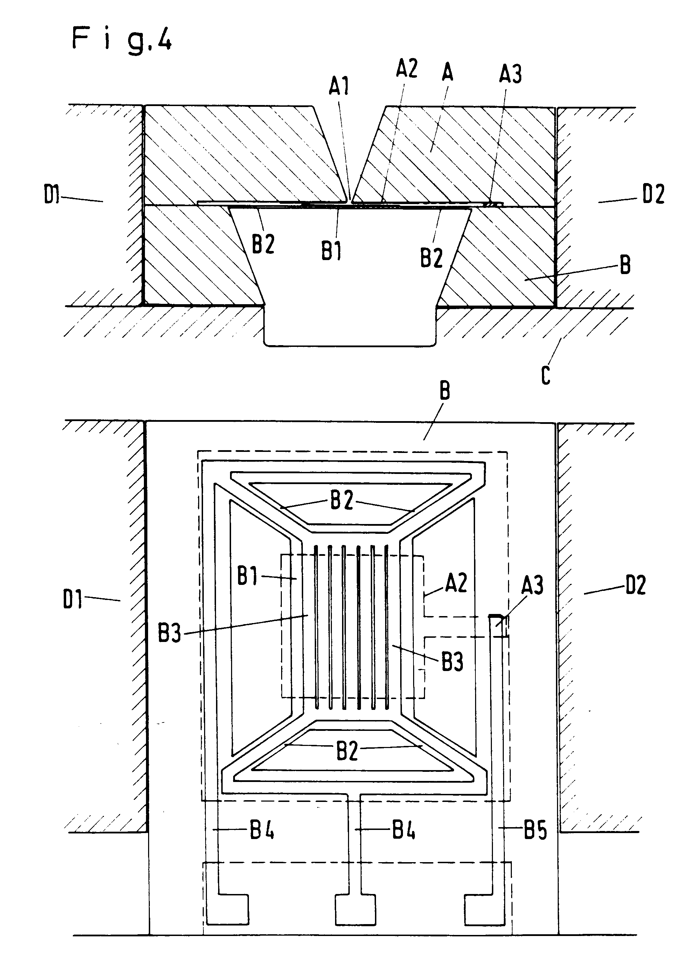

Die prinzipiellen Ausführungsformen des Aktuators als Mikroventil werden im Folgenden näher beschrieben:

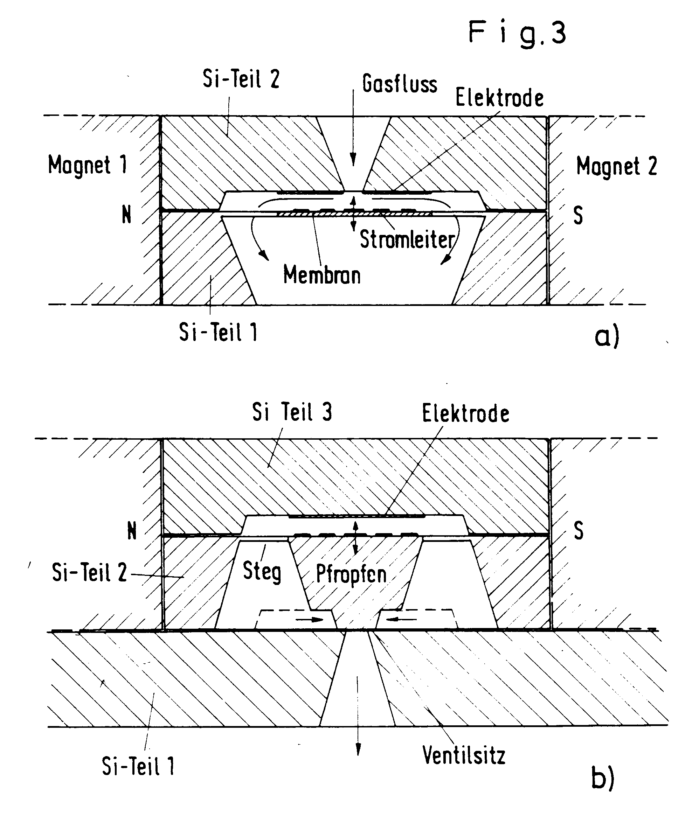

- Fig. 3a: Mikroventil "stromlos offen"
Die Funktionsweise ist klar zu erkennen: Die in Si-Teil 1 durch anisotropes Ätzen erzeugte Membran ist mit Stromleitern belegt, in denen der zur Ventil-Aktivierung benötigte Strom jeweils in gleicher Richtung und senkrecht zur Zeichenebene fließt. Das durch die Dauermagnete 1 und 2 erzeugte Magnetfeld hat die Richtung "links-rechts", sodaß die bei Stromfluß erzeugte Kraft nach "oben" oder "unten" gerichtet ist. Die Membran kann also auf diese Weise aus ihrer Ruhelage herausbewegt werden. Im stromlosen Zustand ist, wie gezeigt, die Ventilöffnung frei, bei Stromdurchgang (in der richtigen Richtung) wird die Membran nach oben ausgelenkt und dichtet die Ventilöffnung ab. Der Zustand "Ventil zu" läßt sich durch Einbeziehung der an Si-Teil 2 im Bereich der Dichtungsfläche angebrachten Elektrode quasi leistungslos aufrechterhalten. Durch Anlegen einer Spannung
zwischen dieser Elektrode und der Membran-Stromleiterstruktur wird die benötigte Anziehungskraft (Kraft 3) erzeugt. Eine Variante der Ventilansteuerung ergibt sich durch Umkehrung der in Fig. 3a gezeichneten Flußrichtung. Im Zustand "Ventil zu" kann die Membran-Haltekraft durch den Systemdruck des steuernden Mediums aufgebracht werden (Servo-Funktion). Die Elemente zur Erzeugung der elektrostatischen Kraftkomponente sind in diesem Fall überflüssig.
Die geometrische Konfiguration der Stromleiter- und Elektrodenstruktur wird in Fig. 4 gezeigt.
- Fig. 3b: Mikroventil "stromlos geschlossen"
Die Kräfte zur Ventilbetätigung werden sinngemäß wie oben erzeugt. Die zum Ventil zusammengefügten Silizium-Teile sind jedoch so ausgebildet, daß im Ruhezustand die Ventilöffnung geschlossen ist. Der Si-Teil 2 trägt statt der beweglichen Membran einen an dünnen Stegen aufgehängten "Pfropfen". Die Flußrichtung des zu steuernden Mediums verläuft auf der Einlaßseite (im Si-Teil 2) senkrecht zur Zeichenebene.
- Fig. 4: Detail-Ausführung des Ventils nach Fig. 3a im Maßstab 50:1 Oben: Querschnitt
Unten: Draufsicht auf Si-Teil 1

### Bezeichnungen:

- A: : Silizium-Teil 2
- A1: : Ventilöffnung
- A2: : Elektrode
- A3: : Kontakt A2 zu B5
- B: : Silizium-Teil 1
- B1: : Membran
- B2: : Stege (Membranaufhängung)
- B3: : Stromleiter-System auf B1
- B4: : Zuleitungen zur B3
- B5: : Zuleitung zur Elektrode A2
- C: : Trägerplatte mit Strömungskanal (Si oder Glas)
- D1: : Dauermagnet 1
- D2: : Dauermagnet 2

Die benötigten Stromleiter, Elektroden- und Kontaktflächen werden vorzugsweise durch Bedampfen mit Gold (o,5 - 1µm Dicke) und die in der Halbleitertechnik üblichen Strukturierungsmethoden hergestellt. Wahlweise sind die Elektrode A2 und/oder die Leiteranordnung B3 mit einer isolierenden Schutzschicht (z.B. 1 µm S-Oxyd) versehen. Der Stromleiter B3 könnte im Prinzip aus einer einzigen leitenden Fläche bestehen, deren Dicke durch den maximal nötigen Strom bestimmt ist. In diesem Fall wäre jedoch die Stromverteilung nicht optimal bezüglich der Krafterzeugung. Die Aufteilung in mehrere parallele Bahnen hat das Ziel, nur die zur Lorentz-Kraft bei tragenden Stromkomponenten zuzulassen. Die Stromzuleitung erfolgt über die Stege B2 (je Steg der halbe Gesamtstrom) und die Leiterbahnen (mit Kontaktpads) B4. Die Zuleitung B5 zur Elektrode A2 wird über die Kontaktstelle A3 zwischen Si-Teil 1 und Si-Teil 2 geführt, um alle elektrischen Anschlüsse auf einer einzigen Bondebene zu haben.

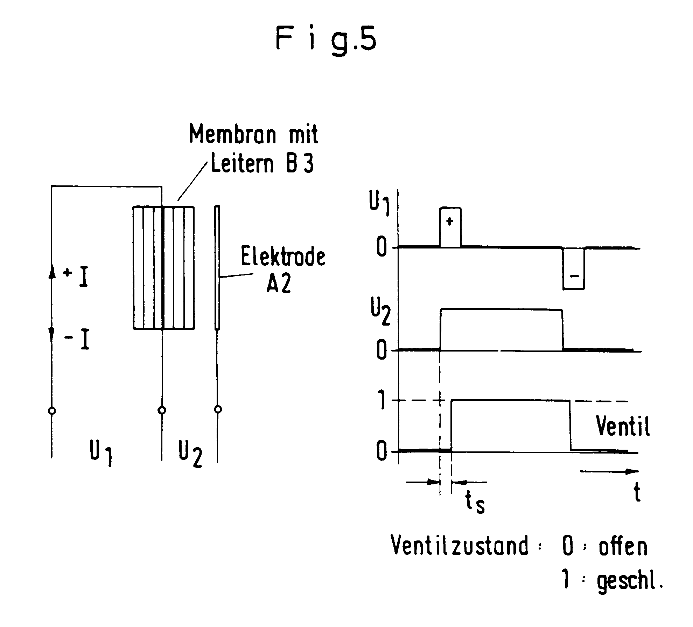

- Fig. 5: Elektrische Ansteuerung des Mikroventils
Es wird davon ausgegangen, daß es sich um ein digital funktionierendes Ventil handelt. Die Erzeugung der Zustände "offen" und "geschlossen" erfolgt durch Ansteuerung mit den beiden Spannungen U1 und U2. Ausgehend vom (stromlosen) offenen Zustand wird das Ventil durch einen Spannungsimpuls +U1 geschlossen, wobei die gleichzeitig angelegte Spannung U2 einerseits die Schließkraft und Schließgeschwindigkeit erhöht, andererseits den geschlossenen Zustand stromlos aufrechterhält. Abschalten von U2 öffnet das Ventil. Dieser Vorgang kann wiederum durch einen Spannungsimpuls -U1 unterstützt werden.

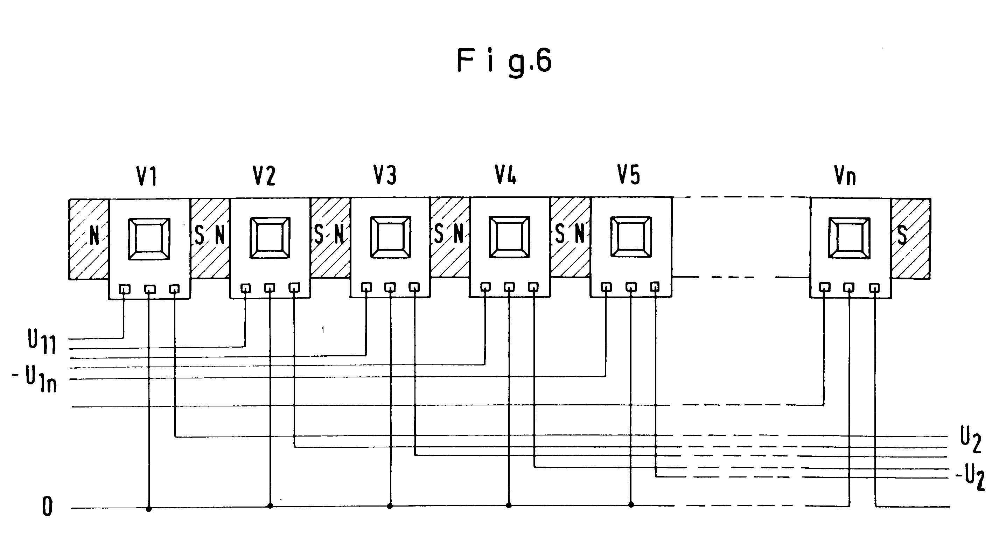

- Fig. 6: Schematische Darstellung eines Ventilarrays V1 ... Vn
Durch parallele Anordnung mehrerer Ventile auf einem gemeinsamen Träger (der u.a. die Zu- und Abflußleitungen enthält) läßt sich mit den beschriebenen Digitalventilen eine näherungsweise analoge Flußsteuerung erzielen, wobei die Nenn-Durchflußmengen der Einzelventile sinnvollerweise binär abgestuft sein sollten (pneumatischer und hydraulischer D/A-Wandler).

## Patentansprüche

1. Mikromechanischer Aktuator mit einem mikrostrukturierten Teil, bestehend aus feststehenden und einem beweglichen Teil, wie z.B. Membran oder Biegebalken oder Wippe, mit relativ geringer Dicke im Vergleich zu ihrer längen- oder flächenhaften Ausdehnung, wobei das bewegliche Teil durch Ausdehnung, Ausbiegung, Auslenkung, Ausnutzung von Wipp-, Kipp- oder Schnappeffekt auf mechanischem, fluidischem oder elektrischem Wege relativ zu einem feststehenden Teil bewegbar ist, insbesondere für Steuer- und Stellglieder, wobei der bewegliche Teil des Aktuators gesteuert in verschiedene Lagen veränderlich ist, bzw. in einer bestimmten Lage festhaltbar ist und daß das Umschalten des beweglichen Teils von einer Ruhelage in eine Arbeitslage (und vice versa) mittels elektromagnetischer Kräfte und das Halten in der Arbeitslage mittels elektrostatischer Kräfte erfolgt, **dadurch gekennzeichnet**, daß das mikrostrukturierte Teil mit Magneten in der gleichen Ebene planar an das bewegliche Teil außen anschließend fest verbunden ist und daß das bewegliche Teil in dieser Ebene planar zu elektrischen Anschlüssen herausgeführte Stromleiter trägt, die in parallelen Bahn so angeordnet sind, daß eine Lorentz-Kraft bei Stromdurchfluß erzeuggt wird.

2. Mikromechanischer Aktuator nach Anspruch 1, **dadurch gekennzeichnet**, daß mehrere integrierte Bauteile parallel oder in Reihe geschaltet sind oder ein flächenhaftes Array aus Linien und Spalten (in X- und Y-Richtung) bilden.

## Claims

1. A micro-mechanical actuator comprising a micro-structured section having a fixed and a movable element, for example a diaphragm or flexible beam or a rocker, which is thin relative to its longitudinal or surface expansion, in which respect the movable element is mechanically, fluidically or electrically moved relative to a fixed element by way of expansion, flexing, inclination, exploitation of rocker, tilt and spring-catch effect, in particular for control and adjusting elements, and that the movable element of the actuator is controllably adjustable into different positions, or it can be held in a specified position, and the switchover of the movable element from its inoperative position into its operative position (and vice versa) is carried out by means of electro-magnetic forces, and holding in its operative position by means of electrostatic forces, **characterised in that** the micro-structured element is firmly attached with magnets in and at the same plane and externally adjacent to the movable element, and that the movable element carries in and at this plane relative to the electrical connection current conductors which are arranged in parallel lines in such a manner that a Lorentz force is produced during the passing of a current.

2. A micro-mechanical actuator according to claim 1, **characterised in that** a plurality of integrated components is connected in parallel or in series or forms a surface array of lines and spaces (in the X- and Y-direction).

## Revendications

1. Actionneur micromécanique avec une partie micro-structurée, comprenant une partie fixe et une partie mobile telle que par example une membrane ou une poutre de flexion ou une bascule, d'épaisseur relativement faible comparativement à son étendue en longueur ou en surface, la partie mobile étant déplaçable par voie mécanique, fluidique ou électrique par rapport à une partie fixe par dilatation, flexion, déviation, utilisation d'effet de basculement, pivotement ou déclic, en particulier pour des éléments de commande et de réglage, la partie mobile de l'actionneur pouvant être amenée de façon commandée dams différentes positions ou être maintenue dans une position déterminée, et la commutation de la partie mobile d'une position de repos à une position de travail (et vice versa) ayant lieu à l'aide de forces électromagnétiques et le maintien dans la position de travail à l'aide de forces électrostatiques, caractérisé par le fait que la partie microstructurée est reliée rigidement dans le même plan à des aimants en se raccordant extérieurment de façon plane à la partie mobile et que la partie mobile porte dans ce plan des conducteurs de courant sortant de façon plane vers des connexions électriques, ces conducteurs étant disposés dans des bandes parallèles de manière qu'une force de Lorentz soit produite lors du passage de courant.

2. Actionneur micromécanique suivant la revendication 1, caractérisé par le fait que plusieurs composants intégrés sont montés en parallèle ou en série ou constituent un réseau plan formé de lignes et de colonnes (suivant les directions X et Y).
